# EUROPEAN PATENT SPECIFICATION

(11) **EP 2 160 686 B1**
(45) Date of publication and mention of the grant of the patent: **24.10.2012**
(21) Application number: 08771928.2
(22) Date of filing: 25.06.2008
(51) Int. Cl.: G06F 12/02

(54) **PHASED GARBAGE COLLECTION AND HOUSE KEEPING OPERATIONS IN A FLASH MEMORY SYSTEM**
ZEITLICH GESTAFFELTE MÜLLSAMMLUNG UND HAUSHALTSVORGÄNGE IN EINEM FLASH-SPEICHERSYSTEM
OPÉRATIONS DE RÉCUPÉRATION DE PLACE ET DE GESTION INTERNE PROGRESSIVES DANS UN SYSTÈME DE MÉMOIRE FLASH

(30) Priority: 27.06.2007 US 769033; 27.06.2007 US 769038
(43) Date of publication of application: 10.03.2010
(73) Proprietor: SanDisk Technologies Inc., Plano, Texas 75024 (US)
(72) Inventor: TRAISTER, Shai, Sunnyvale, California 94085 (US)
(74) Representative: Hitchcock, Esmond Antony
(86) International application number: PCT/US2008/068187
(87) International publication number: WO 2009/003038

(56) References cited:
- US-A- 5 640 529
- US-A1- 2005 091 445
- US-A1- 2005 172 084
- US-A1- 2006 161 728

## Description

The present application relates generally to the operation of flash memory, and more specifically to coordinating internal operations with commands received by a host.

A non -volatile memory system such as a flash memory card or drive is used by a host to store information. Therefore, a command received by the host should be serviced quickly and typically will have priority over whatever other operations may be taking place within the system. A re-programmable non-volatile memory system operable to perform memory system housekeeping operations in the foreground during execution of a host command, is disclosed in US Patent Publication No: 2006/0161728.

Non-volatile memory storage systems may receive, transmit, or issue operations or instructions required to manage data in the memory. Most memory operations received or issued by the non-volatile memory storage system are executed immediately. However, due to different timing limitations (e.g., initialization timeout, write command timeout limitations, and other timing limitations), there might not be enough time allocated to completely execute a memory operation. As a result, the execution of the memory operation may be deferred until the next available timeslot or ignored until the next time the memory operation is triggered. A garbage collection operation is an operation initiated internally (not by a host) to manage the data of the memory system and ensure its reliability. Such operations are initiated by the controller and/or system firmware.

Currently, the memory operations are temporarily stored in the random access memory (RAM) of the non- volatile memory storage system. However, the RAM is configured to store only one of each type of deferred memory operation. For example, if the non- volatile memory storage system needs to refresh a block and, as a result, triggers a garbage collection operation, the garbage collection operation can be stored in the RAM and deferred for execution at a later time. On the other hand, if the non-volatile memory storage system needs to refresh two blocks, both garbage collection operations associated with the refreshes are not stored in the RAM. Furthermore, once a power loss occurs, the information stored in the RAM is lost and the memory operation will not be executed until the next time such memory operation is triggered. Such loss of information can lead to access errors and reduce the reliability of the non-volatile memory storage system. As a result, continuing efforts are being made to improve the storage and processing of memory operations in the non-volatile memory storage system.

The present invention seeks to provide for more efficient use of a memory system through more comprehensive and integrated management of both host commands and internal operations of the memory system. According to the invention, a method of maximizing the utilization of a flash memory storage system comprising a memory controller and flash memory module comprises assigning a priority level to one or more types of house keeping operations higher than a priority level of one or more types of commands received by a host coupled to the storage system; receiving a host command; comparing a priority level of the command to a priority level of a house keeping operation; and performing at least a portion of one house keeping operation determined to have a higher priority level than the received command before servicing the received command.

One aspect of the invention involves a priority scheme that integrates internal operations along with host commands. Tasks will be serviced in order of priority, which in some cases will mean that a host command will not be immediately serviced. Certain operations already taking place when a host command is received may be continued if it is efficient to do so. Host commands may also be slightly delayed in certain scenarios. In one embodiment the system may indicate to a host that it is idle although it is executing an operation. Another aspect relates to an adaptive scheduling system where resources are aliocated based on utilization of the memory.

A flash memory storage system according to the invention comprises a memory controller; and a flash memory module, wherein the memory controller is configured to: assign a priority level to one or more types of house keeping operations higher than a priority level of one or more types of commands received by a host coupled to the storage system; process a host command; compare a priority level of the host command to a priority level of a house keeping operation; and cause at least a portion of one house keeping operation determined to have a higher priority level than the received command to be serviced by the flash memory module before causing the received command to be serviced by the flash memory module.

Embodiments of the invention will now be described by way of example, and with reference to the accompanying drawings, in the drawings.

FIG. IA is a block diagram of an embodiment of a non-volatile memory storage system 102.

FIG. IB is a block diagram of the various entities requiring servicing by a flash memory array of the back end of the system.

FIG. 2 is a flow chart of operations management of the system.

FIG. 3A is a table of general operation types and the associated priorities.

FIG. 3B is a table of operation descriptions and the associated priorities.

FIG. 4 is a flow chart illustrating an aspect of host command processing.

FIG. 5 is a flow chart illustrating adaptive scheduling of operations.

FIG. 6 is a graph of an embodiment of host delay vs. write cache utilization.

FIG. IA is a simplified block diagram of an example of a non-volatile memory storage system, in accordance with an embodiment of the present invention. A host system (e.g., desktop computers, audio players, digital cameras, mobile phones, and other computing devices) may write data to and read data from non-volatile memory storage system 102. Non-volatile memory storage system 102 may be embedded within the host or removably connected to the host. As shown in FIG. IA, nonvolatile memory storage system 102 includes memory controller 110 in communication with memory 118. In general, memory controller 110 controls the operation of memory 118.

Memory controller 110 includes bus 124 that interfaces with system bus 126 through host interface 104. Memory controller 110 further interfaces with memory 118 through memory interface 108. Host interface 104, processor 106 (e.g., microprocessor, microcontrollers, and other processors), memory interface 108, random access memory (RAM) 112, error correcting code (ECC) circuit 114, and read-only memory (ROM) 116 are in communication by way of bus 124. ROM 116 can store a storage system firmware that includes program instructions for controlling the operation of memory 118. Processor 106 is configured to execute the program instructions loaded from ROM 116 or from non-volatile memory cell array 122. The storage system firmware may be temporarily loaded into RAM 112 and additionally, the RAM may be used to buffer data that are transferred between a host and memory 118. Furthermore, RAM 112 may be configured to store queue 131 of memory operations. ECC circuit 114 can check for errors passing through memory controller 110 between the host and memory 118. If errors are found, ECC circuit 114 can correct a number of error bits, the number depending on the ECC algorithm utilized.

Memory 118 can include array logic 120 and non- volatile memory cell array 122. Non-volatile memory cell array 122 may include a variety or a combination of non-volatile memory structures and technologies. Examples of non-volatile memory technologies include flash memories (e.g., NAND, NOR, Single-Level Cell (SLC/BIN), Multi-Level Cell (MLC), Divided bit-line NOR (DINOR), AND, high capacitive coupling ratio (HiCR), asymmetrical contactless transistor (ACT), and other flash memories), erasable programmable read-only memory (EPROM), electrically-erasable programmable read-only memory (EEPROM), read-only memory (ROM), one-time programmable memory (OTP), and other memory technologies. In addition to RAM 112, queue 130 of memory operations may also be stored in non-volatile memory cell array 122.

Furthermore, array logic 120 interfaces memory controller 110 with non-volatile memory cell array 122 and can provide, for example, addressing, data transfer and sensing, and other support to the non-volatile memory cell array. To support non-volatile memory cell array 122, array logic 120 can include row decoders, column decoders, charge pumps, word line voltage generators, page buffers, input/output buffers, address buffers, and other circuitries.

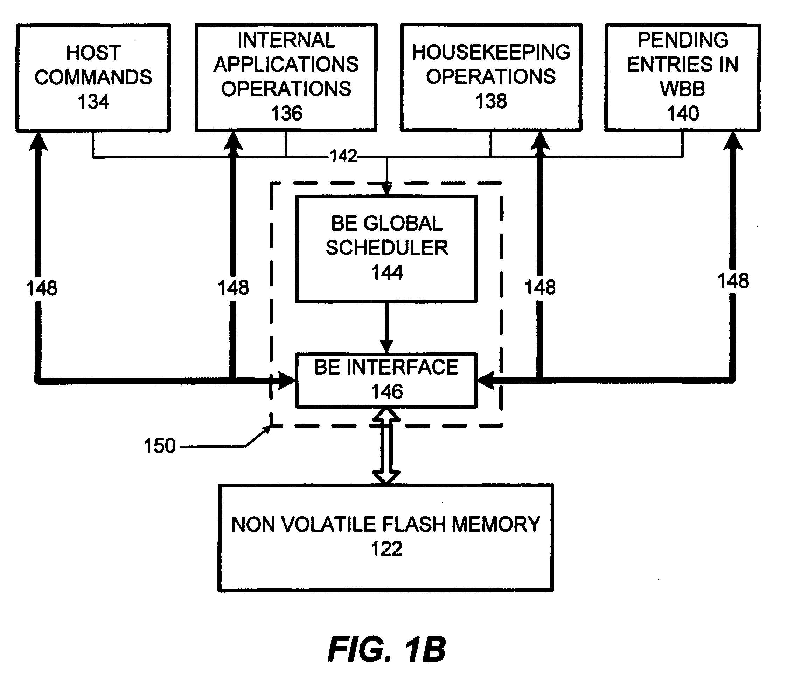

FIG. 1B illustrates the servicing of operations by the system. In general terms, such a system is often referred to as having a "front end" that handles the particulars of the host, e.g. power and clock settings and communication to the host etc., and a "back end" that comprises the flash memory module itself.

Often times the memory controller is busy doing something that is not related to the back-end. In such a case, the flash memory can perform operations rather than sit idle. For example, the memory controller may be playing an MP3 song, or running any other application. In such a case, the controller might be busy servicing the host (streaming out the song or otherwise running an application), while the BE might be idle. In this case, it is preferable that house keeping operations are executed during the idle time for the back end. This will decrease the response time, and thereby increase the performance of the system.

In general, BE idle time will be better utilized with embodiments of the present invention. Idle time may also include time between the host commands, and generally refers to time that the flash memory module is not used in servicing a host command.

For example, during a write command, the system can continue executing a housekeeping operation in (the BE flash memory in) the background while the host is sending data to the memory controller. During a read command, while the host is reading from an internal buffer (e.g. in the memory controller), the system can initiate or reinitiate a housekeeping operation in the flash memory.

The memory controller may perform actions related to the front end, which do not involve the flash memory module, or may be performing operations related to the flash memory module of the back end. As such, it may be considered as part of the "back end" and/or the "front end." Back end manager ("BEM") 150 comprises back end interface 146 and BE global scheduler 144. BE interface 146 serves to accommodate the particulars of memory 122 so that BE global scheduler ("BES") 144 can work with various different configurations/types of memory 122. BES 144 may be implemented as firmware to be executed by the memory controller and/or as hard logic within a state machine or the like.

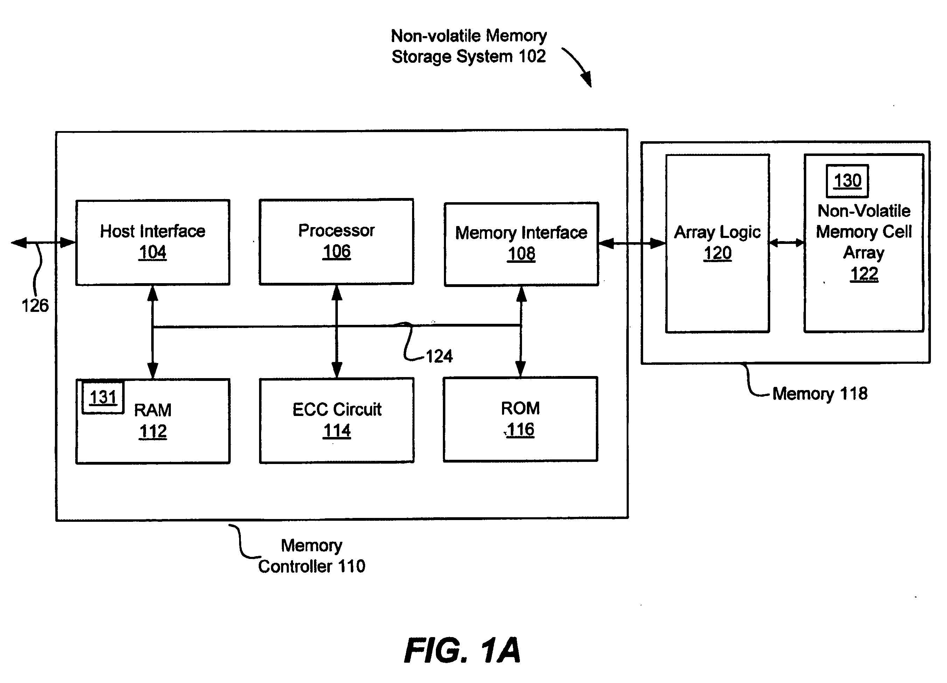

BEM 150 in general, and BES 144 more specifically control the scheduling and servicing of operations required of memory 122. Control signals are sent/received by BES 144 over control lines 142. Data is sent/received by back end interface 146 over data bus 148, which may comprise all or some portion of buses 124 and 126 and control lines 142 of FIGS. 1A and 1B.

Host commands 134, internal applications operations 136, housekeeping operations 138, and pending entries in write cache buffer ("WCB") 140 are all managed by BES 144. In one embodiment the WCB is a portion of the flash memory array, for example a block, that is used as a cache, and may also be referred to as the write buffer block ("WBB"). In other embodiments the WCB may be a standard random access memory cache. Internal application operations 136 are operations required by applications that enhance the basic functionality of the memory system and may be loaded onto the system from time to time. Such application firmware is in addition to the operating firmware of the system. For example, a password management application or home banking software application may be added to a memory card, and such internal (as opposed to host) applications will require servicing by the back end.

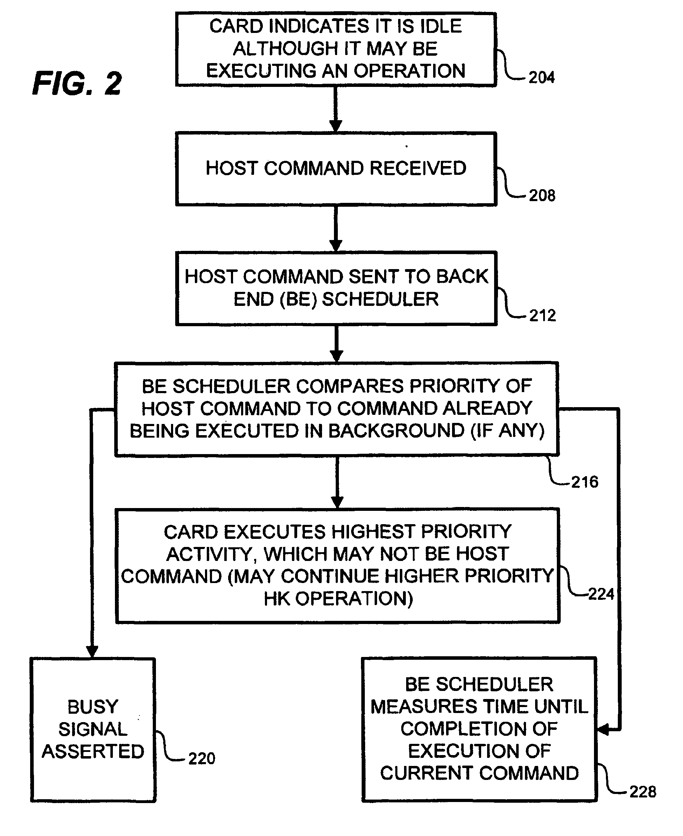

FIG. 2 is a flow chart illustrating an embodiment of command handling. The memory system, although it may take many forms, may hereafter be referred to as a memory card for simplicity. A memory card according to the present invention will utilize time available between host commands to perform other operations. In prior systems, when an operation was taking place, the card would indicate that it was busy. However, as represented by step 204, in this embodiment, the card will indicate it is idle although it may be executing an operation in the background. A host command received in step 208 will be sent to the back end scheduler 144 in step 212. BES 144 will then, in step 216, compare the priority of the host command received in step 208 with the command or operation already being executed in the background, if any such operation is taking place.

During the comparison of step 216, the busy signal will now be asserted, as represented by step 220. At the same time, the BE scheduler will also measure the time until completion of the execution of the current command or operation, as represented by step 228. Alternatively, rather than wait until completion of the execution, the BE scheduler will impose an upper time limit or a window of time. It will then measure elapsed time during the window or until the upper limit has been reached.

The card then executes the highest priority activity, which may not be the host command, as seen in step 224. For example a housekeeping command may be continued if that command has higher priority than the received command.

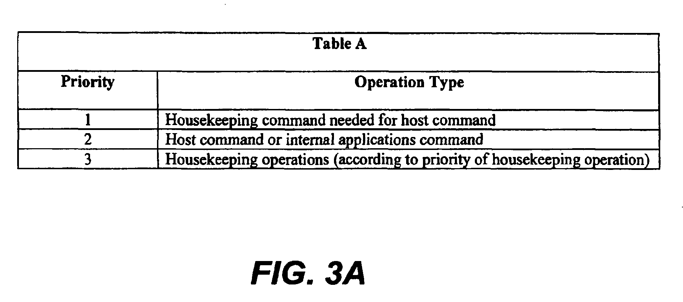

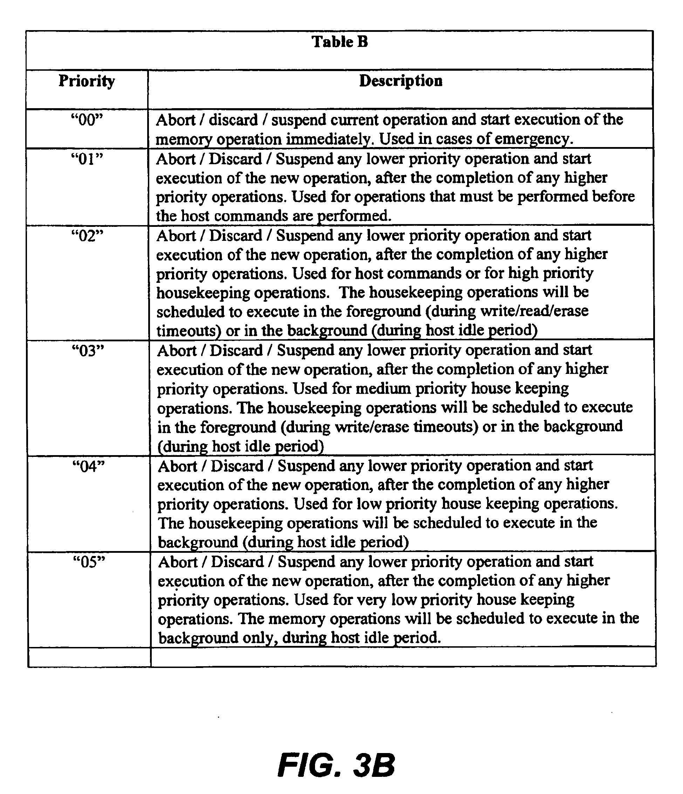

As described above, in certain embodiments BEM 150 services operations according to priority of the operations. The priority of the operations is delineated in Tables A and B below, reproduced as FIGS. 3A and 3B, respectively. Table A indicates at a high level the priority that will be associated with a general operation type. While in prior systems, a host command was generally serviced immediately (including any housekeeping operation required to properly service the command), in the present system, it has been determined that it is often more efficient to allow a housekeeping operation already being performed to be completed, and to service certain types of housekeeping commands prior to a host command, including housekeeping commands that are *not* needed or associated with particular host commands. Other housekeeping commands will have a lower priority, and thus a host command would have a higher priority than such a housekeeping command or operation.

| **Table A** | |
|---|---|
| **Priority** | **Operation Type** |
| 1 | Housekeeping command needed for host command |
| 2 | Host command or internal applications command |
| 3 | Housekeeping operations (according to priority of housekeeping operation) |

Exemplary priority levels "00" through "05 are illustrated in Table B, with "00" being the highest, and "05" being the lowest priority. It should be understood that different prioritization schemes may be utilized other than that shown in Tables A and B, and that they may also change during the lifespan of the card. Cleaning entries from the WBB is very common operation and may have multiple priorities associated with it. For example, a housekeeping operation such as the cleaning of the WBB can have a priority level that varies between "02" and "05." Other types of housekeeping operations may also be assigned different and variable priority levels. Additionally, host commands can be assigned different priorities. The priorities assigned to the operations may also vary between "02" to "05", based on the level of utilization of the write buffer block 140. The utilization of the WBB can be determined many ways, but is preferably determined by comparing the number of (valid) entries in the WBB to the total number of entries that the WBB can hold. In other words, in this measure, utilization will be actual entries/capacity of entries.

| **Table B** | |
|---|---|
| **Priority** | **Description** |
| "00" | Abort / discard / suspend current operation and start execution of the memory operation immediately. Used in cases of emergency. |
| "01" | Abort / Discard / Suspend any lower priority operation and start execution of the new operation, after the completion of any higher priority operations. Used for operations that must be performed before the host commands are performed. |
| "02" | Abort / Discard / Suspend any lower priority operation and start |
| | execution of the new operation, after the completion of any higher priority operations. Used for host commands or for high priority housekeeping operations. The housekeeping operations will be scheduled to execute in the foreground (during write/read/erase timeouts) or in the background (during host idle period) |
| "03" | Abort / Discard / Suspend any lower priority operation and start execution of the new operation, after the completion of any higher priority operations. Used for medium priority house keeping operations. The housekeeping operations will be scheduled to execute in the foreground (during write/erase timeouts) or in the background (during host idle period) |
| "04" | Abort / Discard / Suspend any lower priority operation and start execution of the new operation, after the completion of any higher priority operations. Used for low priority house keeping operations. The housekeeping operations will be scheduled to execute in the background (during host idle period) |
| "05" | Abort / Discard / Suspend any lower priority operation and start execution of the new operation, after the completion of any higher priority operations. Used for very low priority house keeping operations. The memory operations will be scheduled to execute in the background only, during host idle period. |

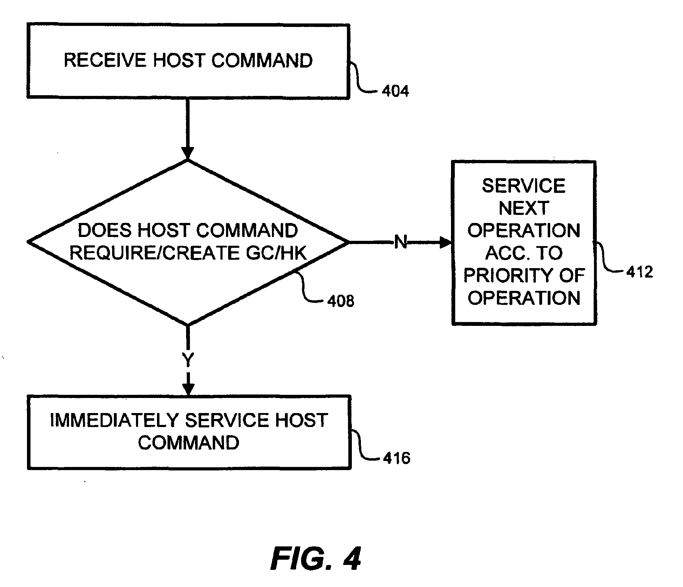

FIG. 4 is another flow chart depicting operations servicing. In step 404, a host command is received. Next, in step 408 the system determines whether the host command received in step 404 requires or creates garbage collection, or a housekeeping operation. Although garbage collection and housekeeping operations are sometimes used interchangeably in the art, garbage collection may be viewed as a subset of housekeeping operations. However, the terms are interchangeably used herein as is common in the art. If it is determined that the host command requires or creates garbage collection, the host command (including the associated garbage collection operation) is immediately serviced, as seen in step 416. If however, it does not, operations are serviced according to priority in step 412. For, example, the operations may be serviced according the priorities shown in Tables A and B.

Performance of audio/video and other high bandwidth applications may be enhanced. Certain applications require a minimum amount of bandwidth to operate properly. For example, audio/video applications require such a minimum bandwidth and predefined timeouts are typically required to accommodate such a requirement. Thus, long operations may not be able to be carried out within the time allowed. Therefore, one embodiment allows for the scheduling of operations to vary with the applications being run by the system. This is referred to as adaptive scheduling. In one embodiment, long operations, such as garbage collections invoked by FAT/DIR updates, may be divided into several shorter operations in order to meet the predefined timeouts imposed by those applications. Thus, the overall performance rating of a given product, such as the SD AV performance class rating, is increased and the buffer size requirements on the host are decreased.

In another embodiment, BEM 150 services operations according to the utilization of the memory. This ensures that the write cache does not become full and is always available when needed.

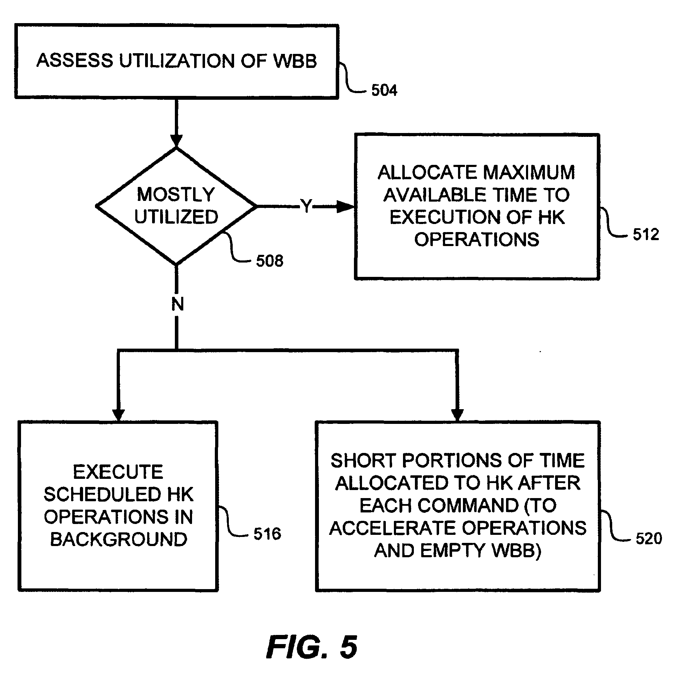

FIG. 5 illustrates a flow chart depicting a particular adaptive scheduling embodiment or process. In step 504, the system will assess the utilization of the write cache or WBB. As mentioned earlier, the WBB is a type of write cache that utilizes the flash memory, and although this is described as the WBB, the utilization of any cache memory, or a particular portion thereof may be measured. If the utilization is below a first threshold, as seen in step 508, an incoming host command will not be delayed, as seen in step 510. If, however, the utilization is above the first threshold, but below a second threshold as determined in step 512, an incoming host command will be delayed in step 516, and the system will execute a housekeeping command during the time allocated to the delayed host command in step 520. If, however, in step 512 it is determined that the utilization is above a second threshold, the system will allocate the maximum available time to execution of housekeeping operations.

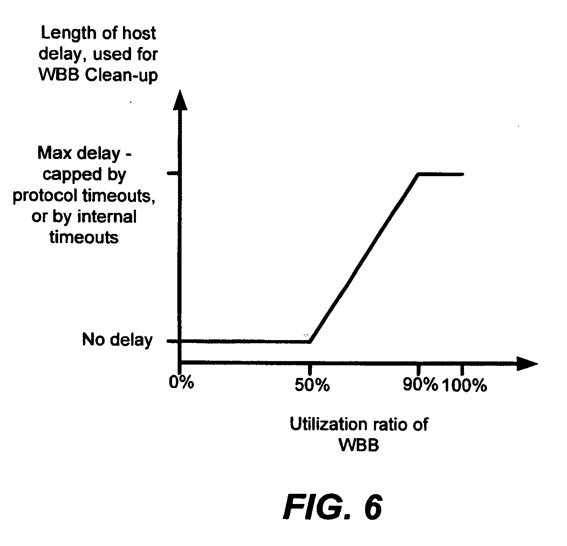

FIG. 6 illustrates that a delay may also vary according to the utilization ratio of the WBB. As seen in FIG. 6, if the WBB is less than 50% full, a performance penalty is not incurred and the host is not stalled in order to clean the WBB ― everything is done in the background (lower priority). When the WBB utilization exceeds 50% the host command processing is delayed according to the utilization ratio until a maximum limit is approached, after which the full available time window is used for clean-up and to execute the host command. While FIG. 6 indicates a linear increase, the change need not be linear and can be initiated at any percentage other than 50%, as the figure is only meant to provide an example.

## Claims

1. A method of maximizing the utilization of a flash memory storage system comprising a memory controller and flash memory module, the method comprising:
assigning a priority level to one or more types of house keeping operations higher than a priority level of one or more types of commands received by a host coupled to the storage system;
receiving a host command;
comparing a priority level of the command to a priority level of a house keeping operation; and
performing at least a portion of one house keeping operation determined to have a higher priority level than the received command before servicing the received command.

2. The method of Claim 1, including the steps of:
receiving a further host command;
checking whether the further host command requires garbage collection before the further command can be properly executed; and
if the received further host command requires garbage collection to be properly executed, servicing the further host command before other commands scheduled for servicing, but if the further host command does not require garbage collection to be properly executed, scheduling another operation for servicing before the further host command if the other operation has a higher priority than the further host command.

3. The method of Claim 2, wherein servicing the further host command comprises performing the required garbage collection operation and then carrying out the further host command.

4. The method of Claim 2, wherein if the further host command does not require garbage collection to be properly executed, other pending operations are serviced according to a priority associated with each of the operations.

5. The method of any preceding Claim, wherein the at least one house keeping operation is a garbage collection operation.

6. A flash memory storage system comprising:
a memory controller, and a flash memory module, wherein the memory controller is configured to:
assign a priority level to one or more types of house keeping operations higher than a priority level of one or more types of commands received by a host coupled to the storage system;
process a host command;
compare a priority level of the host command to a priority level of a house keeping operation; and
cause at least a portion of one house keeping operation determined to have a higher priority level than the received command to be serviced by the flash memory module before causing the received command to be serviced by the flash memory module.

## Patentansprüche

1. Verfahren zum Maximieren der Ausnutzung eines Flashspeicher-Speichersystems, das einen Speichercontroller und ein Flashspeicher-Modul umfasst, wobei das Verfahren umfasst:
Zuweisen eines Prioritätsniveaus zu einem oder mehreren Typen von Verwaltungsoperationen, das höher als ein Prioritätsniveau eines oder mehrerer Typen von Befehlen ist, die durch einen mit dem Speichersystem gekoppelten Host empfangen werden;
Empfangen eines Hostbefehls;
Vergleichen eines Prioritätsniveaus des Befehls mit einem Prioritätsniveau einer Verrvaltungsoperation; und
Durchführen mindestens eines Abschnitts einer Verwaltungsoperation, von der bestimmt wurde, dass sie ein höheres Prioritätsniveau als der empfangene Befehl hat, bevor der empfangene Befehl abgearbeitet wird.

2. Verfahren nach Anspruch 1, die Schritte einschließend:
Empfangen eines weiteren Hostbefehls;
Prüfen, ob der weitere Hostbefehl eine Speicherbereinigung erfordert, bevor der weitere Befehl richtig ausgeführt werden kann; und
wenn der empfangene weitere Hostbefehl eine Speicherbereinigung erfordert, um richtig ausgeführt zu werden: Abarbeiten des weiteren Hostbefehls vor anderen zum Abarbeiten eingeplanten Befehlen, aber wenn der weitere Hostbefehl keine Speicherbereinigung erfordert, um richtig ausgeführt zu werden: Einplanen einer anderen Operation zum Abarbeiten vor dem weiteren Hostbefehl, wenn die andere Operation eine höhere Priorität als der weitere Hostbefehl hat.

3. Verfahren nach Anspruch 2, worin das Abarbeiten des weiteren Hostbefehls umfasst: Durchführen der erforderlichen Speicherbereinigungsoperation und dann Ausführen des weiteren Hostbefehls.

4. Verfahren nach Anspruch 2, worin, wenn der weitere Hostbefehl keine Speicherbereinigung erfordert, um richtig ausgeführt zu werden, andere anstehende Operationen gemäß einer Priorität abgearbeitet werden, die jeder der Operationen zugeordnet ist.

5. Verfahren nach einem der vorhergehenden Ansprüche, worin die mindestens eine Verwaltungsoperation eine Speicherbereinigungsoperation ist.

6. Flashspeicher-Speichersystem, umfassend:
einen Speichercontroller; und ein Flashspeicher-Modul, worin der Speichercontroller konfiguriert ist zum
Zuweisen eines Prioritätsniveaus zu einem oder mehreren Typen von Verwaltungsoperationen, das höher als ein Prioritätsniveau eines oder mehrerer Typen von Befehlen ist, die durch einen mit dem Speichersystem gekoppelten Host empfangen werden;
Verarbeiten eines Hostbefehls;
Vergleichen eines Prioritätsniveaus des Hostbefehls mit einem Prioritätsniveau einer Verwaltungsoperation; und
Bewirken, dass mindestens ein Abschnitt einer Verwaltungsoperation, von der bestimmt wurde, dass sie ein höheres Prioritätsniveau als der empfangene Befehl hat, durch das Flashspeicher-Modul abgearbeitet wird, bevor bewirkt wird, dass der empfangene Befehl durch das Flashspeicher-Modul abgearbeitet wird.

## Revendications

1. Procédé d'augmentation à un maximum de l'utilisation d'un système de mémorisation de mémoire flash comprenant un contrôleur de mémoire et un module de mémoire flash, le procédé comprenant :
l'attribution d'un niveau de priorité à un ou plusieurs types d'opérations de gestion interne supérieur à un niveau de priorité d'un ou de plusieurs types de commandes reçues par un hôte couplé au système de mémorisation ;
la réception d'une commande d'hôte ;
la comparaison d'un niveau de priorité de la commande a un niveau de priorité d'une opération de gestion interne ; et
l'exécution d'au moins une partie d'une opération de gestion interne déterminée comme ayant un niveau de priorité plus élevé que la commande reçue avant de prendre en charge la commande reçue.

2. Procédé selon la revendication 1, comprenant les étapes :
de réception d'une autre commande d'hôte ;
de vérification si l'autre commande d'hôte nécessite la collecte d'informations non valides avant que l'autre commande puisse être exécutée correctement ; et
si l'autre commande d'hôte reçue nécessite la collecte d'informations non valides pour être correctement exécutée, de prise en charge de l'autre commande d'hôte avant les autres commandes planifiées pour être prises en charge, mais si l'autre commande d'hôte ne nécessite pas la collecte d'informations non valides pour être exécutée correctement, de planification d'une autre opération à prendre en charge avant l'autre commande d'hôte si l'autre opération a une priorité plus élevée que l'autre commande d'hôte.

3. Procédé selon la revendication 2, dans lequel la prise en charge de l'autre commande d'hôte comprend l'exécution de l'opération de collecte d'informations non valides requise et ensuite l'exécution de l'autre commande d'hôte.

4. Procédé selon la revendication 2, dans lequel, si l'autre commande d'hôte ne nécessite pas la collecte d'informations non valides pour être exécutée correctement, les autres opérations en attente sont prises en charge conformément à une priorité associée à chacune des opérations.

5. Procédé selon l'une quelconque des revendications précédentes, dans lequel ladite au moins une opération de gestion interne est une opération de collecte d'informations non valides.

6. Système de mémorisation de mémoire flash comprenant :
un contrôleur de mémoire et un module de mémoire flash, dans lequel le contrôleur de mémoire est configuré pour :
attribuer un niveau de priorité à un ou plusieurs types d'opérations de gestion interne plus élevé qu'un niveau de priorité d'un ou de plusieurs types de commandes reçues par un hôte couplé au système de mémorisation ;
traiter une commande d'hôte ;
comparer un niveau de priorité de la commande d'hôte à un niveau de priorité d'une opération de gestion interne ; et
faire en sorte qu'au moins une partie d'une opération de gestion interne déterminée comme ayant un niveau de priorité plus élevé que la commande reçue soit prise en charge par le module de mémoire flash avant de faire en sorte que la commande reçue soit prise en charge par le module de mémoire flash.
